(19) Europäisches Patentamt / European Patent Office / Office européen des brevets

(11) **EP 3 822 091 B1**

(12) **EUROPEAN PATENT SPECIFICATION**

(45) Date of publication and mention of the grant of the patent:
**29.05.2024  Bulletin 2024/22**

(21) Application number: **19843431.8**

(22) Date of filing: **30.07.2019**

(51) International Patent Classification (IPC):
**B60C 1/00** $^{(2006.01)}$    **B60C 19/00** $^{(2006.01)}$
**B60C 19/12** $^{(2006.01)}$    **B29D 30/00** $^{(2006.01)}$

(52) Cooperative Patent Classification (CPC):
**B29D 30/0061; B60C 1/00; B60C 19/002;**
B60C 19/12

(86) International application number:
**PCT/JP2019/029800**

(87) International publication number:
**WO 2020/027115 (06.02.2020 Gazette 2020/06)**

(54) **PNEUMATIC TIRE WITH ACOUSTIC DAMPER, AND METHOD FOR MANUFACTURING SAID TIRE**

LUFTREIFEN MIT EINEM AKUSTISCHEN DÄMPFER UND VERFAHREN ZUR HERSTELLUNG DIESES REIFENS

PNEU AVEC AMORTISSEUR ACOUSTIQUE, ET PROCÉDÉ DE FABRICATION DUDIT PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **01.08.2018   JP 2018145052**

(43) Date of publication of application:
**19.05.2021   Bulletin 2021/20**

(73) Proprietor: **Sumitomo Rubber Industries, Ltd.**
**Kobe-shi, Hyogo 651-0072 (JP)**

(72) Inventors:
• **YUKAWA Naoki**
  **Kobe-shi, Hyogo 651-0072 (JP)**
• **MATSUNAMI Sho**
  **Kobe-shi, Hyogo 651-0072 (JP)**
• **SATO Takuya**
  **Kobe-shi, Hyogo 651-0072 (JP)**
• **KINAMI Saeko**
  **Amagasaki-shi, Hyogo 661-0977 (JP)**
• **SADO Shinichiro**
  **Amagasaki-shi, Hyogo 661-0977 (JP)**
• **IDO Hiroaki**
  **Amagasaki-shi, Hyogo 661-0977 (JP)**
• **URANO Atsushi**
  **Amagasaki-shi, Hyogo 661-0977 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
EP-A1- 1 876 038          EP-A1- 2 067 634
EP-A1- 2 093 079          EP-A1- 3 199 382
EP-A2- 2 562 009          WO-A1-2008/062673
WO-A1-2011/125952         WO-A1-2011/125952
WO-A1-2016/060239         DE-A1-102015 212 105
JP-A- 2006 143 020        JP-A- 2006 143 020
JP-A- 2006 306 302        JP-A- 2013 043 643
JP-A- 2015 526 535        JP-A- 2018 508 401
JP-B2- 5 658 766

**Description**

**TECHNICAL FIELD**

The present invention relates to a pneumatic tire with a noise damper having improved road noise reduction effect, and a method of manufacturing the same.

**BACKGROUND ART**

JP 5658766 B2 and JP 5860411 B2 have proposed a pneumatic tire and a method of manufacturing the pneumatic tire in which a continuous ribbon-shaped noise damper spirally wound in a tire circumferential direction is formed directly on an inner surface of the tire by applying a liquid compound containing a blowing agent to the inner surface of the tire.

In this proposed manufacturing method, work efficiency can be significantly improved as compared with the case where a ribbon-shaped sponge body which has been foam-molded in advance is attached to the inner surface of a tire by using, for example, a double-sided adhesive tape.

Further, in the tire, since a continuous groove is formed between the wound portions of the spiral noise damper, heat dissipation is improved, therefore, high-speed durability is improved. However, as a result of the research of the present inventor, it has been found that there is no significant difference in the high-speed durability as compared with the case where the noise damper is a single annular body extending continuously in the tire circumferential direction.

Moreover, in the case of the spiral noise damper, since a width of the noise damper itself is narrow, it has been found that the noise damper itself tends to be deformed and damaged by the stress received during running. Further, it was also found that the cross-sectional area of the entire noise damper is small due to the continuous groove, therefore, noise dampening performance (road noise reduction effect) is not sufficiently exerted.

JP 2006-143020 A discloses a tire having an annular sound control tool which is foamed of polyurethane resin as a sponge material and arranged on an inner surface of the tread. Similar pneumatic tires are known from EP 1 876 038 A1, EP 2 093 079 A1, and EP 3 199 382 A1.

**SUMMARY OF THE INVENTION**

**PROBLEMS TO BE SOLVED BY THE INVENTION**

Therefore, an object of the first invention is to provide a pneumatic tire with a noise damper capable of suppressing damage to the noise damper and improving the noise dampening performance. Further, the second invention is to provide a manufacturing method for producing a pneumatic tire with the noise damper of the first invention with excellent work efficiency.

**MEANS FOR SOLVING THE PROBLEMS**

The first invention is a pneumatic tire with a noise damper including a pneumatic tire and a noise damper made of porous resin foam and arranged on a tread inner surface of the pneumatic tire, wherein the noise damper is formed by a single annular body extending continuously in a tire circumferential direction, the noise damper has a core density $\delta 1$ in a range of from 35 to 65 kg/m3 and an overall density $\delta 0$ in a range of from 50 to 105 kg/m3, and a maximum height (H) of the noise damper from the tread inner surface is in a range of from 12 to 30 mm.

In the pneumatic tire with the noise damper according to the present invention, a ratio $\delta 1/\delta 0$ of the core density 61 and the overall density $\delta 0$ is in a range of from 0.4 to 0.8.

In the pneumatic tire with the noise damper according to the present invention, it is preferred that a cross-sectional area of the noise damper is in a range of from 7.4% to 12.4% of a cross-sectional area of a tire inner cavity of the pneumatic tire.

In the pneumatic tire with the noise damper according to the present invention, it is preferred that the noise damper is fixed to the tread inner surface via a sealant layer for preventing puncture.

The second invention is a method for manufacturing the pneumatic tire with the noise damper of the first invention, wherein

the porous resin foam is polyurethane foam, and
the noise damper is formed in an application step in which a reaction mixture of a polyisocyanate component (X) and a polyol-containing component (Y) is applied to the tread inner surface of the pneumatic tire.

In the method for manufacturing the pneumatic tire with the noise damper according to the present invention, it is preferred that in the application step, the reaction mixture is applied by using a nozzle to the tread inner surface of the pneumatic tire rotating in an upright position.

In the method for manufacturing the pneumatic tire with the noise damper according to the present invention, it is preferred that in the application step, in a lower half portion from a center of the pneumatic tire rotating in the upright position, the reaction mixture is applied by using the nozzle inclined at an angle θ in a range of from 20 to 70 degrees backwards in a rotational direction with respect to the tread inner surface.

In the method for manufacturing the pneumatic tire with the noise damper according to the present invention, it is preferred that in the application step, a distance between the nozzle and the tread inner surface is in a range of from 1 to 30 cm.

In the method for manufacturing the pneumatic tire with the noise damper according to the present invention, it is preferred that the reaction mixture has a cream time of 10 seconds or less, a gel time in a range of from 20 to 60 seconds, and a rise time of 90 seconds or less.

In the method for manufacturing the pneumatic tire with the noise damper according to the present invention, it is preferred that in the application step, a rotational speed of the pneumatic tire is in a range of from 10 to 60 rpm.

In the method for manufacturing the pneumatic tire with the noise damper according to the present invention, it is preferred that the polyol-containing component (Y) contains a polyol component (a) which is polyoxyalkylene polyol having an average number of functional groups in a range of from 2 to 3 and a hydroxyl number in a range of from 20 to 70 mgKOH/g, the polyoxyalkylene polyol being obtained by ring-opening addition polymerization of propylene oxide and ethylene oxide, and as a blowing agent, 3 to 10 parts by mass of water (d) with respect to 100 parts by mass of the polyol component (a).

**EFFECTS OF THE INVENTION**

In the first invention, the noise damper made of the porous resin foam is formed as the single annular body extending continuously in the tire circumferential direction. Therefore, a wide width of the noise damper itself can be secured, thus the deformation caused by stress received during running can be suppressed, thereby, it is possible that the occurrence of damage is suppressed. Moreover, since it does not have a continuous groove, a wide cross-sectional area of the noise damper can be secured, therefore, it is possible that high noise dampening performance is exerted.

Further, in the noise damper, the core density $\delta 1$ is lower than the overall density $\delta 0$ and moreover, the core density $\delta 1$ is regulated in the range of from 35 to 65 kg/m3, and the overall density $\delta 0$ is regulated in the range of from 50 to 105 kg/m3. In this noise damper, while the core density $\delta 1$ is low, the overall density $\delta 0$ is high, that is, the density on a surface layer portion side is high. Therefore, while exerting the noise dampening performance of the porous resin foam, the deformation is decreased as compared with the porous resin foam having a constant density, thereby, excellent durability is exerted.

In addition, the core density 61 of the noise damper is regulated in the range of from 35 to 65 kg/m3 and the overall density $\delta 0$ is regulated in the range of from 50 to 105 kg/m3, therefore, the effect of improving the noise dampening performance and suppressing the damage to the noise damper can be exerted more effectively. It should be noted that when the core density 61 is lower than 35 kg/m3 and when the overall density $\delta 0$ is lower than 50 kg/m3, the physical properties of the noise damper, especially elasticity and strength, are too small. As a result, the deformation of the noise damper during running tends to be increased, therefore, the damage suppressing effect of the noise damper tends to be decreased. Further, when the core density 61 is higher than 65 kg/m3 and when the overall density $\delta 0$ is higher than 105 kg/m3, the mass of the noise damper is increased, therefore, the stress itself which the noise damper receives during running is increased. Therefore, also in this case, the damage suppressing effect of the noise damper tends to be decreased.

Furthermore, in the noise damper, the core density $\delta 1$ is in the range of from 35 to 65 kg/m3 and the overall density $\delta 0$ is in the range of from 50 to 105 kg/m3, and the maximum height (H) from the tread inner surface is in the range of from 12 to 30 mm. With the maximum height (H) in this range, the effect of the noise dampening performance and damage-reducing effect of the noise damper can be exerted in a better balance. If the maximum height (H) is less than 12 mm, the noise dampening performance is insufficient. If the maximum height (H) is more than 30 mm, the damage-reducing effect of the noise damper tends to be decreased.

In the second invention, by the application step in which the reaction mixture of the polyisocyanate component (X) and the polyol-containing component (Y) is applied to the tread inner surface, the single annular body made of polyurethane foam and extending continuously in the tire circumferential direction is formed.

Thereby, the pneumatic tire with the noise damper of the first invention can be produced with excellent work efficiency. In particular, since the noise damper is formed by the single annular body, the work efficiency is excellent as compared with the case where the noise damper is spirally wound a plurality of times.

## BRIEF DESCRIPTION OF THE DRAWINGS

[Figure 1] a tire meridian section showing an embodiment of a pneumatic tire with a noise damper formed by the manufacturing method of the present invention.
[Figure 2] a circumferential cross-sectional view of the pneumatic tire with the noise damper.
[Figure 3A, 3B] a circumferential cross-sectional view and a meridian section schematically showing an application process.
[Figure 4] a meridian section showing another embodiment of the pneumatic tire with the noise damper.

## MODE FOR CARRYING OUT THE INVENTION

An embodiment of the present invention will now be described in detail.

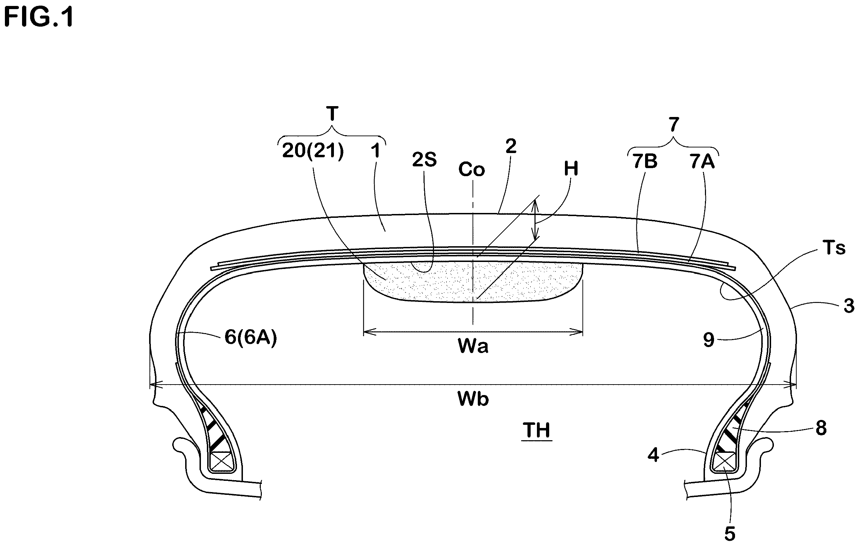

As shown in Figure 1, a pneumatic tire with a noise damper (T) of the present embodiment is provided with a pneumatic tire 1 and a noise damper 20 made of a porous resin foam and arranged on a tread inner surface (2S) thereof.

The pneumatic tire 1 is a tubeless tire and can be of a well-known structure. The pneumatic tire 1 of the present embodiment is provided with a carcass 6 extending between bead cores 5 of bead portions 4 and a tread portion 2 via sidewall portions 3, and a belt layer 7 arranged outside the carcass 6 in a tire radial direction and inside the tread portion 2.

The carcass 6 is formed by at least one (one in this embodiment) carcass ply 6A having carcass cords arranged at an angle of 75 degrees or more and 90 degrees or less with respect to the tire circumferential direction, for example. In each of the bead portions 4, a bead apex rubber 8 extending radially outward from a respective one of the bead cores 5 is arranged for bead reinforcement.

The belt layer 7 is formed by a plurality of (two, for example) belt plies 7A and 7B each having belt cords arranged at an angle of 10 degrees or more and 40 degrees or less with respect to the tire circumferential direction, for example. The belt plies 7A and 7B are overlayed such that the direction of the belt cords of one of the belt plies is different from that of the other belt ply. If required, a band layer (not shown) in which band cords are wound spirally with respect to the tire circumferential direction may be provided radially outside the belt layer 7.

On an inner side of the carcass 6, an inner liner layer 9 forming a tire inner cavity surface (Ts) is arranged. This inner liner layer 9 is made of an air impermeable rubber, such as butyl rubber and the like, which keeps the inner pressure of the tire airtight.

Then, the noise damper 20 made of a porous resin foam is adhered to the tread inner surface (2S). The tread inner surface (2S) is a radially inner surface of the tread portion 2 and constitutes a part of the tire inner cavity surface (Ts).

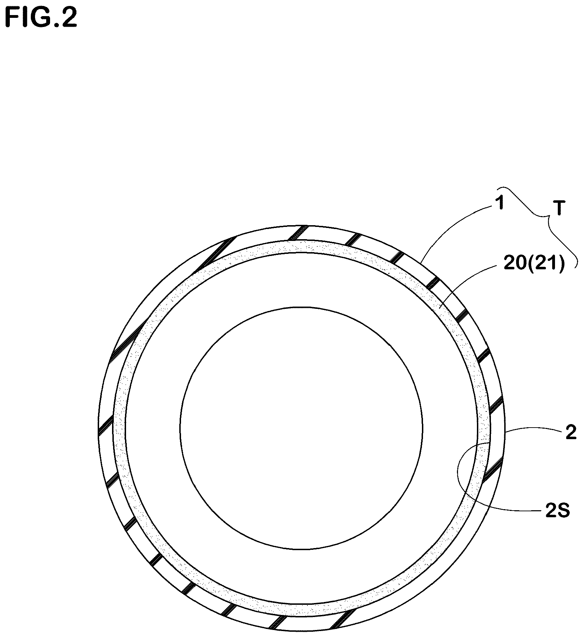

As shown in Figure 2, the noise damper 20 is formed by a single annular body 21 extending continuously in the tire circumferential direction. In this embodiment, a two-component reaction polyurethane foam, in which a polyisocyanate component (X) is reacted with a polyol-containing component (Y), is used as the porous resin foam of the noise damper 20.

In the present invention, a core density $\delta 1$ of the noise damper 20 is lower than an overall density $\delta 0$. Moreover, the core density $\delta 1$ is regulated in the range of from 35 to 65 kg/m3, and the overall density $\delta 0$ is regulated in the range of from 50 to 105 kg/m3.

In this noise damper 20, while the core density $\delta 1$ is low, the overall density $\delta 0$ is high, that is, the density on a surface layer portion side is high. Therefore, while exerting the noise dampening performance of the porous resin foam, the deformation is decreased as compared with the porous resin foam having a constant density, thereby, excellent durability is exerted.

However, when a ratio $\delta 1/\delta 0$ is too small, a central portion side of the porous resin foam tends to be hollow and the surface layer portion tends to be thick. On the contrary, this tendency makes the porous resin foam fragile, which causes a disadvantage in the durability of the porous resin foam. In addition, cavity resonance sound is reflected on the surface of the porous resin foam, which also leads to a decrease in the noise dampening performance. Therefore, the ratio $\delta 1/\delta 0$ is in the range of from 0.4 to 0.8. In particular, it is preferred that the lower limit of the ratio $\delta 1/\delta 0$ is 0.5 or more, and it is preferred that the upper limit is 0.7 or less.

In the present invention, "core density $\delta 1$" is defined as the density in the remaining portion (core portion) obtained by cutting the surface layer portion with a thickness of 2 mm or more from the noise damper 20, and is measured in accordance with Japanese Industrial Standard JIS K 7222:2005 (corresponding to "apparent core density"). Specifically, a sample (50 mm (in a tread width direction) x 200 mm (in a length direction) x 10 mm (in a height direction)) of the core portion of the noise damper 20 is obtained from each of three or more locations in the circumferential direction, and the average value of the densities of the samples is calculated as "core density $\delta 1$".

Further, the overall density $\delta 0$ is defined as the density of the entire noise damper 20 including the surface layer portion, and is measured in accordance with JIS K 7222:2005 (corresponding to "apparent overall density"). Specifically, by actually measuring the noise damper 20, a cross-sectional area in the vertical direction of a tread surface and a length (200 mm) in the tread surface direction are obtained, and a volume is obtained by multiplying the cross-sectional area by the length, then the "overall density $\delta 0$" is obtained by the volume divided by the weight.

Here, the core density $\delta 1$ of the noise damper 20 is regulated in the range of from 35 to 65 kg/m3 and the overall density $\delta 0$ is regulated in the range of from 50 to 105 kg/m3, therefore, the effect of improving the noise dampening performance and suppressing the damage to the noise damper can be exerted more effectively. When the core density 61 is lower than 35 kg/m3 and when the overall density $\delta 0$ is lower than 50 kg/m3, the physical properties of the noise damper 20, especially elasticity and strength, are too small. As a result, the deformation of the noise damper 20 during running tends to be increased, therefore, the damage suppressing effect of the noise damper 20 tends to be decreased. Further, when the core density 61 is higher than 65 kg/m3 and when the overall density $\delta 0$ is higher than 105 kg/m3, the mass of the noise damper 20 is increased, therefore, the stress itself which the noise damper 20 receives during running is increased. Therefore, also in this case, the damage suppressing effect of the noise damper 20 tends to be decreased.

Further, in the pneumatic tire (T) with the noise damper, since the noise damper 20 is formed as a single annular body 21, the width of the noise damper 20 itself can be secured widely, therefore, the deformation due to the stress received during running can be suppressed. Moreover, since it does not have a continuous groove, a wide cross-sectional area of the noise damper 20 can be secured, which can contribute to the improvement of the noise dampening performance.

Here, from the point of view of the noise dampening performance and the durability, as shown in Figure 1, it is preferred that a maximum height (H) of the noise damper 20 from the tread inner surface (2S) is in the range of from 12 to 30 mm. When the maximum height (H) is less than 12 mm, the noise dampening performance tends to be decreased. On the other hand, when it is larger than 30 mm, the stress occurred during running is increased, therefore, the durability tends to be decreased.

From the same point of view, it is preferred that a cross-sectional area (Sa) of the noise damper 20 is in the range of from 7.4% to 12.4% of a cross-sectional area (Sb) of a tire inner cavity (TH) of the pneumatic tire 1. When the cross-sectional area (Sa) is less than 7.4% of the cross-sectional area (Sb), the noise dampening performance tends to be decreased. On the contrary, when it is larger than 12.4%, the stress occurred during running is increased, therefore, the durability tends to be decreased.

Further, from the same point of view, a width (Wa) in a tire axial direction of the noise damper 20 is preferably 30% or more of a tire section width (Wb), and when it is lower than 30%, the noise dampening performance tends to be decreased.

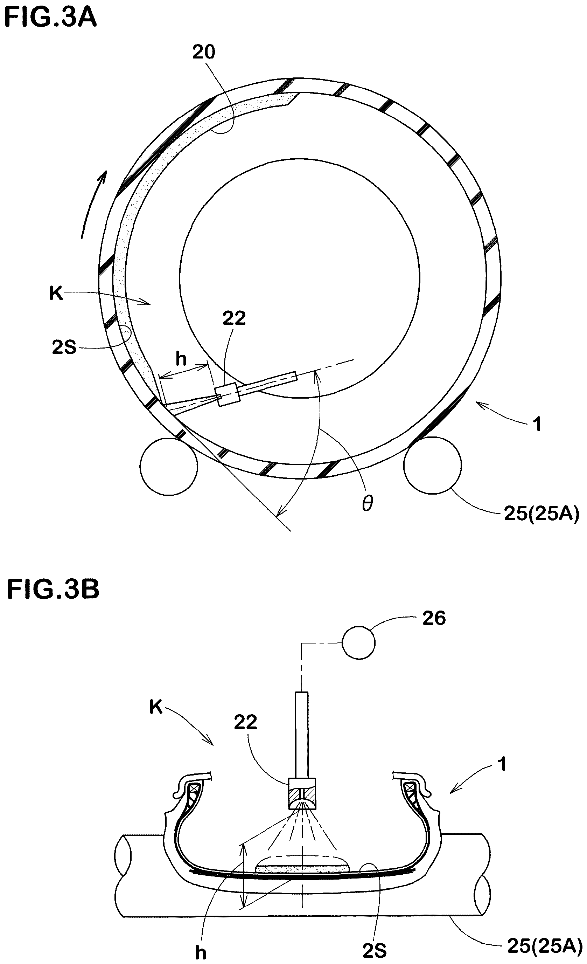

Next, a method of manufacturing the pneumatic tire (T) with the noise damper will be described. As shown in Figures 3A and 3B, the manufacturing method includes an application step (K) in which a reaction mixture of the polyisocyanate component (X) and the polyol-containing component (Y) is applied to the tread inner surface (2S). In this application step (K), the noise damper 20 made of polyurethane foam composed of the single annular body 21 extending continuously in the tire circumferential direction is formed.

In the application step (K), it is preferred that the reaction mixture is applied by using a nozzle 22 to the tread inner surface (2S) of the pneumatic tire 1 rotating in an upright position to form a film of the reaction mixture at an appropriate width depends on the width of the tire. In particular, in order to make the width (Wa) of noise damper 20 30% or more of the tire section width (Wb), a flat nozzle with a flat spray shape and a wide spray angle can be suitably used as the nozzle 22.

At this time, in order to obtain the width (Wa) in the above range, it is preferred that a distance (h) between the nozzle 22 and the tread inner surface (2S) is in the range of from 1 to 30 cm. If it is less than 1 cm, it is difficult to obtain the width (Wa) in the above range. Further, if it is larger than 30 cm, it becomes difficult to accurately control the width (Wa) of the noise damper 20, which leads to disadvantage to the noise dampening performance.

In the application step (K), it is preferred that the reaction mixture is applied in the lower half portion from the center of the pneumatic tire rotating in an upright position, by using the nozzle inclined at an angle $\theta$ in the range of from 20 to 70 degrees backwards in the rotational direction with respect to the tread inner surface (2S). By specifying the direction of the spray as described above, the splattering of the sprayed reaction mixture can be suppressed.

Furthermore, in the application step (K), it is preferred that a rotational speed (n) of the pneumatic tire is in the range of from 10 to 60 rpm. If the rotational speed (n) is higher than 60 rpm, deformation occurs before the reaction mixture foams and the shape stabilizes, which may cause a decrease in the formation accuracy of the noise damper 20. On the contrary, if the rotational speed (n) is lower than 10 rpm, it causes disadvantage in the work efficiency.

The reference numeral 25 in the drawing indicates a tire holding jig, which includes rollers 25A for supporting the pneumatic tire 1 in an upright position between them. Further, the reference numeral 26 indicates a mixer, which mixes the polyisocyanate component (X) and the polyol-containing component (Y), and pumps the reaction mixture to the nozzle 22.

Next, the reaction mixture suitable for the noise damper 20 will be described.

< 1. Polyisocyanate Component (X) >

Although the polyisocyanate component (X) constituting the reaction mixture is not particularly limited, examples thereof include an aromatic, alicyclic, or aliphatic polyisocyanate having two or more isocyanate groups; a mixture of two or more of the above polyisocyanates; modified polyisocyanates obtained by modifying these described above, and the like.

Specific examples of the polyisocyanate component (X) include tolylene diisocyanate (TDI), diphenylmethane diisocyanate (MDI), polymethylene polyphenyl polyisocyanate (commonly known as crude MDI), xylylene diisocyanate (XDI), isophorone diisocyanate (IPDI), hexamethylene diisocyanate (HMDI) and the like. Further, specific examples of the modified polyisocyanate include prepolymer-type modified products, nurate-modified products, urea-modified products, and carbodiimidemodified products of each of the above-mentioned polyisocyanates. Among these, MDI, crude MDI, or modifications of these are preferred. It is preferred to use MDI, crude MDI or the modifications thereof from the point of view of improved foaming stability, improved durability, price, and so on.

Although viscosity (mPa s at 25 degree Celsius) of the polyisocyanate component (X) is not particularly limited, it is preferably in the range of from 50 to 2000, more preferably in the range of from 100 to 1000, and even more preferably in the range of from 120 to 500.

Although the specific gravity of the polyisocyanate component (X) is not particularly limited, but it can be in the range of from 1.1 to 1.25, for example.

< 2. Polyol-containing Component (Y) >

The polyol-containing component (Y) which constitutes the reaction mixture contains a polyol component (a), a catalyst (b), a surfactant (c), and water (d) as a blowing agent.

< 2-1. Polyol Component (a) >

The polyol component (a) is preferably a polyether polyol, and more preferably a polyoxyalkylene polyol. Particularly preferably, the polyol component (a) is a polyoxyalkylene polyol, which has an average number of functional groups in the range of from 2 to 3 and a hydroxyl number in the range of from 20 to 70 mgKOH/g, obtained by ring-opening addition polymerization of propylene oxide and ethylene oxide.

In the present invention, the "average number of functional groups" means the number of functional groups per molecule, and means the average value of the number of active hydrogens of the initiator. It is advantageous to set the average number of functional groups of the polyol component (a) in the above range in order to avoid problems of significant deterioration in the physical properties such as dry heat compression set of the polyurethane foam. Further, it is also preferable in order to avoid problems of deterioration in the physical properties such as tensile strength due to decrease in elongation and increase in hardness of the resulting polyurethane foam.

The hydroxyl number of the polyol component (a) is in the range of from 20 to 70 mgKOH/g, more preferably in the range of from 25 to 65 mgKOH/g, and even more preferably in the range of from 25 to 60 mgKOH/g. Setting the hydroxyl number of the polyol component (a) to 20 mgKOH/g or more is advantageous in suppressing collapse and the like and stably producing polyurethane foam molded products. Further, it is preferred that the hydroxyl number of the polyol is 70 mgKOH/g or less in order to obtain sound absorption performance without impairing the flexibility of the polyurethane foam. Here, the hydroxyl number in the present invention is the number of mg of potassium hydroxide required to acetylate the hydroxyl group contained in 1 gram of the sample (solid content). Then, the hydroxyl group in the sample is acetylated with acetic anhydride, and the unused acetic acid is titrated with a potassium hydroxide solution, and then it is obtained by the following formula.

$$\text{Hydroxy group value [mgKOH/g]} = [((A\text{-}B)\times f\times 28.05)/S]+\text{acid value}$$

A: amount (ml) of 0.5 mol/l potassium hydroxide ethanol solution used in the blank test
B: amount (ml) of 0.5 mol/l potassium hydroxide ethanol solution used for titration
f: factor
S: sample collection amount (g)

The polyol component (a) can be produced by a method known in the art using an initiator, a polymerization catalyst, and polymerization units such as an alkyl oxide. Examples of the polymerization catalyst used for producing the polyol include an alkali metal catalyst, a cesium catalyst, a phosphate catalyst, and a composite metal cyanide complex catalyst (DMC catalyst) and the like.

As the initiator used in the production of the polyol component (a), it is preferred to use a compound, alone or in combination, having 2 or 3 active hydrogens in the molecule. Specific examples of the compound having the active hydrogen number of 2 include ethylene glycol, propylene glycol, 1,4-butanediol, diethylene glycol, and dipropylene glycol. Further, specific examples of the compound having the active hydrogen number of 3 include glycerin and trimethylolpropane.

Further, regarding the polyol component (a), as described above, it is preferred that an alkylene oxide is used as a ring-opening addition polymerization unit. Examples of the alkylene oxide include ethylene oxide, propylene oxide, 1,2-epoxybutane, 2,3-epoxybutane, and the like, but propylene oxide or a combination of propylene oxide and ethylene oxide is preferable. When propylene oxide and ethylene oxide are used in combination, they may be separately sequentially ring-opened and polymerized to form a block polymerized chain, or a mixture of propylene oxide and ethylene oxide may be ring-opened and polymerized to form a random polymerized chain. Furthermore, the formation of a random polymerized chain and the formation of a block polymerized chain may be combined. When forming a block polymerization chain, it is preferred that the alkylene oxide is ring-opened and addition-polymerized in the order of propylene oxide and ethylene oxide, or ethylene oxide is added first and then propylene oxide and ethylene oxide are added in this order.

Furthermore, as another type, the polyol component (a) may be a polyester polyol obtained by reacting a polycarboxylic acid with a hydroxyl group-containing compound having low molecular weight, a polycarbonate polyol obtained by ring-opening polymerization of caprolactone, or a polyether polyamine obtained by an amination of the hydroxyl group of polyether polyol or by hydrolyzing an isocyanate prepolymer of polyether polyol. The polyol component (a) may be one kind or a mixture of two or more kinds.

The content of the polyol component (a) in the polyol-containing component (Y) is preferably in the range of from 50 to 100 parts by mass, more preferably in the range of from 50 to 90 parts by mass, and further preferably in the range of from 70 to 90 parts by mass with respect to 100 parts by mass of the polyol-containing component (Y).

< 2-2. Catalyst (b) >

A preferred example of the catalyst (b) is a urethanization catalyst. The urethanization catalyst is advantageous in reacting the polyols with the polyisocyanate component. As the urethanization catalyst, all catalysts that promote the urethanization reaction can be used, and the examples include tertiary amines such as triethylenediamine, dimethylaminoethanol, bis (2-dimethylaminoethyl) ether, N,N,N',N'-tetramethyl hexamethylenediamine; carboxylic acid metal salts such as potassium acetate and potassium 2-ethylhexanoate; organic metal compounds such as stanas octoate and dibutyltin dilaurate, for example. The content of the catalyst is preferably in the range of from 0.1 to 5 parts by mass with respect to 100 parts by mass of the polyol component (a).

< 2-3. Surfactant (c) >

Surfactant (c) is included from the point of view of forming good cells in polyurethane foam. The cell structure of the sound-absorbing flexible polyurethane foam suitable for the noise damper 20 can be adjusted by appropriately determining the type of surfactant (c), its combination, and the amount used. It is preferred to use the surfactant (c) to properly adjust the average cell size and airflow rate in order to exert excellent sound absorption properties as well as to ensure that no foam collapse or shrinkage occurs after foaming.

The surfactant (c) may be one kind or a composition obtained by combination of two or more kinds of components. Specific examples of the surfactant (c) include a silicone-based surfactant, a fluorine-containing compound-based surfactant, and the like, but a silicone-based surfactant is preferred. According to a preferred embodiment of the present invention, the silicone-based surfactant is a silicone surfactant containing a polyoxyalkylene / dimethylpolysiloxane copolymer as a main component. The silicone-based surfactant may be a polyoxyalkylene / dimethylpolysiloxane copolymer alone or may contain other concomitant components. Examples of other concomitant components include polyalkylmethylsiloxane, glycols, polyoxyalkylene compounds, and the like. Further, according to another preferred embodiment of the surfactant of the present invention, the surfactant (c) is a composition which contains two or more selected from a polyoxyalkylene-dimethylpolysiloxane copolymer, a polyalkylmethylsiloxane, and a polyoxyalkylene compound. Such compositions are particularly advantageous in terms of foam stability. Examples of commercially available surfactants include, under the product names available from MOMENTIVE: L-580, L-590, L-620, L-680, L-682, L-690, SC-154, SC-155, SC-240, L-598, L-2100, L-2171, SH-210, L-2114, SE-232, L-533, L-534, L-539, M-6682B, L-626, L-627 , L-3001, L-3111, L-3415, L-3002, L-3010, L-3222, L-3416, L-3003, L-3333, L-3417, L-2171, L-3620, L -3630, L-3640, L-3170, L-3360, L-3350, L-3555, L-3167, L-3150, L-3151, L-5309, SH-209, L-3184, and so on. Further, examples of another commercial products include, under the product names available from Toray Dow Coming Co., Ltd.: SF-2964, SF-2962, SF-2969, SF-2971, SF-2902L, SF-2904, SF-2908, SF-2909, SRX-274C, SZ-1328, SZ-1329, SZ-1330, SZ-1336, SZ-1346, SZ-3601, SRX-294A, SRX-280A, SRX-294A, SRX-298, SH-190, SH-192, SH-194, and so on. Furthermore, examples of yet another commercial products include, under the product names available from Shin-Etsu Chemical Co., Ltd.: F-327, F-345, F-305, F-242T, and so on, and under the product names available from BYK Chemie: Silbyk 9700, Silbyk 9705, Silbyk 9710, and so on. In addition, the examples include, under the product names available from EVONIK: B4113, B4900, B8002, B8110, B8123, B8228, B8232, B8715LF2, B8724LF2, BF2370, BF2470, and so on.

The content of surfactant (c) may be appropriately selected, but it is preferably in the range of from 0.1 to 10 parts by mass with respect to 100 parts by mass of the polyol component (a).

< 2-4. Water (d) >

After reacting with the polyisocyanate component (X), the water (d) releases carbon dioxide and contributes to the formation of polyurethane foam. The use of water (d) is particularly advantageous for reducing the density of polyurethane foam. The amount of water (d) used is preferably in the range of from 3 to 10 parts by mass, more preferably in the range of from 3 to 6 parts by mass with respect to 100 parts by mass of the polyol component (a). It is preferred that the amount of water used is 10 parts by mass or less in order to ensure the stability of the polyurethane foam during foaming.

< 2-5. Other Components >

When forming the noise damper 20, desired components may be added to the reaction mixture in addition to the above-mentioned components. The desired components include fillers such as calcium carbonate, barium sulfate, and the like: surfactants such as emulsifiers and the like; anti-aging agents such as antioxidants, ultraviolet absorbers, and the like; flame retardants, plasticizers, colorants, antifungal agents, defoamers, dispersants, discoloration inhibitors, and so on.

From the point of view of ensuring stability, a flame retardant may be contained in the reaction mixture as a desired component. The flame retardant is preferably a phosphorus-based flame retardant, and preferred examples include tricresyl phosphate (TCP), triethyl phosphate (TEP), tris (β-chloroethyl) phosphate (TCEP), and tris (β-chloropropyl) phosphate (TCPP) and the like. The flame retardant may be used alone or in combination of two or more. Examples of other flame retardants include metal oxides (iron oxide, titanium oxide, and cerium oxide, for example), metal hydroxides (aluminum hydroxide, for example), brominated compounds (brominated diphenyl ethers, brominated diphenyl alkanes, brominated phthalimide, for example), phosphorus compounds (red phosphorus, phosphate esters, phosphate ester salts, phosphate amides, organic phosphine oxide, for example), nitrogen compounds (ammonium polyphosphate, phosphazene, triazine, melamine cyanurate, for example). These flame retardants may be used alone or in combination of two or more.

As a desired component, a so-called cross-linking agent of relatively small molecular weight with polyisocyanate-reactive active hydrogen may be added as needed. Examples of the cross-linking agent include compounds having two or more hydroxyl groups. Suitable cross-linking agents include compounds having an average number of functional groups of from 2.0 to 8.0 and a hydroxyl number of from 200 to 2000 mgKOH/g. As the cross-linking agent, one type may be used alone, or two or more types may be used in combination.

In the reaction mixture, it is preferred that the amount of the polyisocyanate component (X) and the polyol-containing component (Y) used is such that the ratio of the polyol-containing component (Y) and the polyisocyanate component (X) in the raw material is in the range of from 80 to 120 in an isocyanate index. The isocyanate index is represented by [(ratio of equivalent of isocyanate group of the polyisocyanate component (X) and equivalent of active hydrogen in the polyol-containing component (Y)) $\times$ 100].

In the application step (K), the temperature of the reaction mixture when the reaction mixture is applied is a temperature that does not interfere with the formation of the polyurethane foam, and for example, it is in the range of from 20 to 60 degree Celsius and preferably in the range of from 30 to 50 degree Celsius. Further, it is preferred that the viscosity of the reaction mixture when the reaction mixture is applied is in the range of from 1000 to 5000 mPa s at 25 degree Celsius.

In the application step (K), although the output speed of the reaction mixture may be appropriately set depending on the size of the noise damper 20 and the reactivity of the raw material, it is, for example, in the range of from 1 to 2000 g/sec, and preferably in the range of from 10 to 1000 g/sec.

In the reaction mixture, it is preferred that cream time, gel time, and rise time are short from the point of view of suppressing dripping and forming polyurethane foam quickly.

Specifically, it is preferred that the reaction mixture has the cream time of 10 seconds or less, the gel time in the range of from 20 to 60 seconds, and the rise time of 90 seconds or less. If the cream time is longer than 10 seconds, the gel time is longer than 60 seconds, or the rise time is longer than 90 seconds, viscosity increase and foaming will be delayed, which leads to dripping and poor foaming of the polyurethane foam. If the gel time is shorter than 20 seconds, the viscosity increase process will be too fast, which may lead to a loss of applicability, clogging of the nozzle 22, and the like.

In the present invention, the "cream time" refers to the time from the start of mixing to the start of foaming after a change in hue begins to occur in the reaction mixture of the polyisocyanate component (X) and the polyol-containing component (Y), when the reaction mixture is foamed. The "gel time" refers to the time, when foaming the reaction mixture, from the start of mixing to the point where viscosity increase occurs and gelling begins (for example, where the liquid begins to thread when touched with a solid rod). The "rise time" refers to the time, when foaming the reaction mixture, from the start of mixing to the end of foaming (for example, when the rise of the foam surface due to foaming stops).

Examples of methods for shortening the cream time and the gel time include increasing the content amount of the catalyst (b) and the like, for example. Examples of methods for shortening the rise time include increasing the content amount of the water (d) and/or the catalyst (b) and the like, for example.

The cream time, the gel time, and the rise time are determined by the average value of the times measured visually by a plurality of trained inspectors (10 inspectors, for example), including the embodiments described below.

By free-foaming the reaction mixture on the tread inner surface (2S), the porous resin foam having the core density $\delta 1$ lower than the overall density $\delta 0$ can be obtained. Further, the core density $\delta 1$ and the overall density $\delta 0$ can be adjusted by adjusting the mixing ratio of the polyisocyanate component (X) and the polyol-containing component (Y), and by adjusting the type and mixing ratio of the polyol component (a), the catalyst (b), the surfactant (c), and the water (d) in the polyol-containing component (Y).

Furthermore, the ratio $\delta 1/\delta 0$ can be adjusted, for example, by adjusting the reaction rate by selecting the polyol component (a) or the catalyst (b), by adjusting the stabilizing power by selecting the surfactant (c), or by adjusting the expansion ratio by the amount of the water (d) as a blowing agent, and so on.

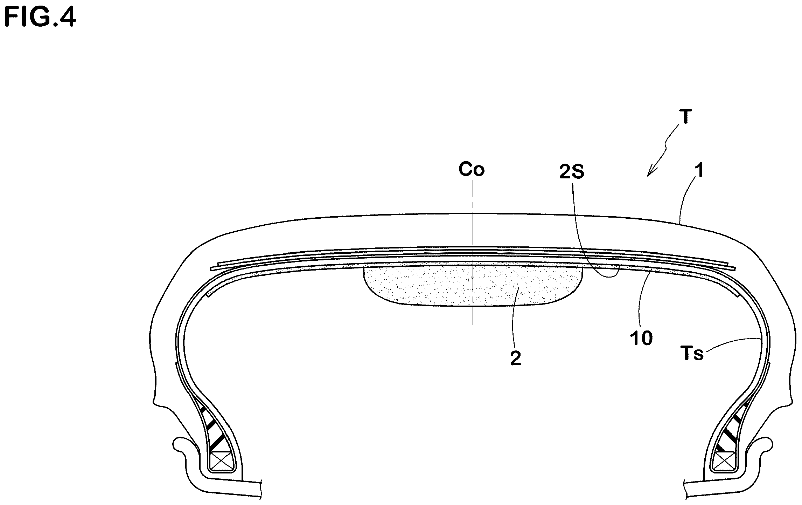

Figure 4 shows another embodiment of the pneumatic tire with the noise damper (T). In the present embodiment, the noise damper 20 is adhered to the tread inner surface (2S) via a sealant layer 10 for preventing puncture. In this case, puncture sealing property can be exerted without impairing the noise dampening performance (the road noise reduction effect). The sealant layer 10 is arranged on the tire inner cavity surface (Ts) at a position including at least the tread inner surface (2S).

A sealant material forming the sealant layer 10 contains a rubber component, a liquid polymer, a cross-linking agent, and the like. As the rubber component, butyl-based rubber such as butyl rubber, halogenated butyl rubber, and the like is employed. It should be noted that the butyl-based rubber and diene-based rubber can be employed in combination as the rubber component, but from the point of view of fluidity and the like, it is preferred that the content of the butyl-based rubber in 100 parts by mass of the rubber component is 90 parts by mass or more.

Examples of the liquid polymers include liquid polybutene, liquid polyisobutene, liquid polyisoprene, liquid polybutadiene, liquid poly $\alpha$-olefin, liquid isobutylene, liquid ethylene $\alpha$-olefin copolymer, liquid ethylene propylene copolymer, liquid ethylene butylene copolymer, and so on. Among them, liquid polybutene is preferred from the point of view of imparting adhesiveness and the like.

The content of the liquid polymer is preferably 50 parts by mass or more, more preferably 100 parts by mass or more, with respect to 100 parts by mass of the rubber component. If it is less than 50 parts by mass, the adhesiveness may be decreased. The upper limit of the content is preferably 400 parts by mass or less, more preferably 300 parts by mass or less. If it is more than 400 parts by mass, the sealant material may flow during running.

Well-known compounds can be used as the cross-linking agent, but organic peroxides are preferred. By using butyl-based rubber or liquid polymer in the organic peroxide cross-linking system, adhesiveness, sealing property, fluidity, and processability are improved.

Examples of the organic peroxide include, for example, acyl peroxides such as benzoyl peroxide, dibenzoyl peroxide, p-chlorobenzoyl peroxide, and the like, peroxyesters such as 1-butyl peroxyacetate, t-butylperoxybenzoate, t-butylperoxy phthalate, and the like, ketone peroxides such as methyl ethyl ketone peroxide, and the like, alkyl peroxides such as di-t-butylperoxybenzoate, 1,3-bis (1-butylperoxyisopropyl) benzene, and the like, hydroperoxides such as t-butyl hydroperoxide, and the like, dicumyl peroxide, t-butyl cumyl peroxide, and the like. Among these, acyl peroxides are preferable, and dibenzoyl peroxide is particularly preferable, from the point of view of adhesiveness and fluidity.

The content amount of the organic peroxide (cross-linking agent) is preferably 0.5 parts by mass or more, more preferably 1.0 part by mass or more, with respect to 100 parts by mass of the rubber component. If it is less than 0.5 parts by mass, the cross-linking density becomes low, therefore, the sealant material may flow. The upper limit of the content amount is preferably 40 parts by mass or less, more preferably 20 parts by mass or less. If it is more than 40 parts by mass, the cross-linking density becomes high, therefore, the sealing property may be deteriorated.

While detailed description has been made of particularly preferred embodiments of the present invention, the present invention can be embodied in various forms without being limited to the illustrated embodiments.

**EVALUATION**

With respect to tires having the basic structure shown in Figure 1 and provided with the noise damper according to the specification listed in Table 1, the noise dampening performance (road noise performance), the high-speed durability of the tire, the durability of the noise damper, and formation efficiency of the noise damper are evaluated.

In the evaluation, as the noise damper, a reaction mixture of the polyisocyanate component (X) and the polyol-containing component (Y) is applied and freely foamed to form the porous resin foam made of polyurethane foam in which the core density $\delta 1$ and the overall density $\delta 0$ are varied. Then, the above performances of the pneumatic tire with the noise damper are evaluated. As the polyisocyanate component (X), a prepolymer-type modified MDI polyisocyanate (isocyanate-group content 25%, viscosity 260 mPa·s at 25 degrees Celsius) available from Sumika Covestro Urethane Co., Ltd. is used. Further, as the polyol component (a) in the polyol-containing component (Y), polyoxyalkylene polyol, which is obtained by ring-opening addition polymerization of propylene oxide (PO) and ethylene oxide (EO) in this order by using glycerin as an initiator, is used. The average number of functional groups of the polyoxyalkylene polyol is 3, and the hydroxyl number is 28 mgKOH/g). Further, the core density $\delta 1$ and the overall density $\delta 0$ are varied by the type of the catalyst (b) and the surfactant (c) and the amount of the blowing agent (water).

In Reference 1, as the noise damper, a ribbon-shaped porous resin foam having a width of 24 mm is spirally wound 4.6 times. Therefore, in the Reference 1, a continuous spiral groove having a width of 15 mm is formed between the wound portions. The tire section width (Wb) of each of the tires is 178 mm.

< Noise Dampening Performance >

Pneumatic tires with the noise dampers are mounted on all wheels of a test vehicle, and then the noise inside the vehicle is measured during running on a road noise measuring road (road having a rough asphalt surface). The results are indicated by an increase or decrease value with respect to the Reference 1, and - (minus) indication means reduction in road noise.

< High-speed Durability of Tire >

During a step speed type load/speed performance test is carried out in accordance with ECE30, the speed (km/H) at which the tire breaks is measured. The higher the value, the better.

< Durability of Noise Damper >

The damage condition of the noise damper is observed after the pneumatic tire with the noise damper is run on a drum at a speed of 100 km/h for a distance of 8000 km. The results are indicated by an index based on the Reference being 100. The larger the number, the better the durability.

< Formation Efficiency of Noise Damper >

The time is measured until the noise damper is formed on the tread inner surface, and the results are indicated by an index based on the Reference 1 being 100. The lower the number, the better.

Table 1

| | | Ref. 1 | Ex.1 | Ex.2 | Ex.3 | Ex.4 | Ex.5 | Ex.6 | Ex.7 | Ref. 2 | Ex.8 |
|---|---|---|---|---|---|---|---|---|---|---|---|
| <Noise damper> | | spiral | annular body | | | | | | | | |
| | | (4.6 times) | (single) | | | | | | | | |
| Porous resin foam | | polyurethane foam | | | | | | | | | |
| · Core density $\delta 1$ | [kg/m3] | 21 | 65 | 53 | 49 | 46 | 35 | 49 | 49 | 49 | 49 |
| · Overall density $\delta 0$ | [kg/m3] | 35 | 105 | 88 | 81 | 72 | 50 | 81 | 81 | 81 | 81 |
| · Ratio $\delta 1/\delta 0$ | | 0.6 | 0.62 | 0.6 | 0.6 | 0.64 | 0.7 | 0.6 | 0.6 | 0.6 | 0.6 |
| Maximum height (H) | | 15 | 15 | 15 | 15 | 15 | 15 | 20 | 30 | 35 | 12 |
| Ratio Sa/Sb | [%] | 8.5 | 9.3 | 9.3 | 9.3 | 9.3 | 9.3 | 12.4 | 18.6 | 21.6 | 7.4 |
| Ratio Wa/Wb | [%] | 72 | 56 | 56 | 56 | 56 | 56 | 56 | 56 | 56 | 56 |
| <Application step> | | discharge | apply to match tire width | | | | | | | | |
| Angle $\theta$ | [degree] | 90 | 45 | | | | | | | | |
| Distance (h) | [cm] | 5 | 15 | | | | | | | | |

(continued)

| | | Ref. 1 | Ex.1 | Ex.2 | Ex.3 | Ex.4 | Ex.5 | Ex.6 | Ex.7 | Ref. 2 | Ex.8 |
|---|---|---|---|---|---|---|---|---|---|---|---|
| · Cream time | [second] | 5 | | | | | | | | | |
| · Gel time | [second] | 32 | | | | | | | | | |
| · Rise time | [second] | 61 | | | | | | | | | |
| Noise dampening performance | [dB] | 0 | -1.5 | -2.0 | -2.0 | -3.0 | -3.0 | -3.0 | -5.0 | -5.0 | -1.0 |
| Durability of Noise damper | | 100 | 105 | 110 | 115 | 120 | 130 | 115 | 110 | 100 | 125 |
| Formation efficiency of Noise damper | | 100 | 43 | 43 | 43 | 43 | 43 | 57 | 72 | 80 | 34 |

By performing the above evaluation using the test tires obtained as described above, the values in Table 1 or close to it can be obtained. As shown in the table, in the Examples, excellent noise dampening performance can be exerted while improving the durability of the noise damper. Further, in the Examples, the noise damper is a single annular body, and the noise damper is formed only by rotating the tire once in the application step, therefore, the formation efficiency of the noise damper is improved compared with the Reference 1 (having the spirally wound noise damper).

It should be noted that, as shown in Figure 4, in the case where the pneumatic tire with the noise damper, which has the noise damper adhered via the sealant layer for puncture prevention, is made by way of test, the noise dampening performance and the durability similar to those without the sealant layer are exerted without impairing the puncture prevention effect of the sealant layer.

## DESCRIPTION OF REFERENCE SIGNS

1    pneumatic tire
2S   tread inner surface
10   sealant layer
20   noise damper
21   annular body
22   nozzle
K    application step
T    pneumatic tire with noise damper

## Claims

1. A pneumatic tire with a noise damper (T) comprising:

   a pneumatic tire (1); and
   a noise damper (20) made of porous resin foam and arranged on a tread inner surface (2S) of the pneumatic tire (1);

   wherein

   the noise damper (20) is formed by a single annular body (21) extending continuously in a tire circumferential direction, and
   a maximum height (H) of the noise damper (20) from the tread inner surface (2S) is in a range of from 12 to 30 mm, wherein the noise damper (20) has a core density $\delta 1$ in a range of from 35 to 65 kg/m3 and an overall density $\delta 0$ in a range of from 50 to 105 kg/m3, and
   wherein a ratio $\delta 1/\delta 0$ of the core density 61 and the overall density $\delta 0$ is in a range of from 0.4 to 0.8.

2. The pneumatic tire with the noise damper (T) according to claim 1, wherein a cross-sectional area of the noise damper (20) is in a range of from 7.4% to 12.4% of a cross-sectional area of a tire inner cavity (TH) of the pneumatic tire (1).

3. The pneumatic tire with the noise damper (T) according to claim 1 or 2, wherein the noise damper (20) is fixed to the tread inner surface (2S) via a sealant layer (10) for preventing puncture.

4. A method for manufacturing the pneumatic tire with the noise damper (T) according to any one of claims 1 to 3, wherein

the porous resin foam is polyurethane foam, and
the noise damper (20) is formed in an application step in which a reaction mixture of a polyisocyanate component (X) and a polyol-containing component (Y) is applied to the tread inner surface (2S) of the pneumatic tire (1).

5. The method for manufacturing the pneumatic tire with the noise damper (T) according to claim 4, wherein in the application step, the reaction mixture is applied by using a nozzle (22) to the tread inner surface (2S) of the pneumatic tire (1) rotating in an upright position.

6. The method for manufacturing the pneumatic tire with the noise damper (T) according to claim 5, wherein in the application step, in a lower half portion from a center of the pneumatic tire (1) rotating in the upright position, the reaction mixture is applied by using the nozzle (22) inclined at an angle $\theta$ in a range of from 20 to 70 degrees backwards in a rotational direction with respect to the tread inner surface (2S).

7. The method for manufacturing the pneumatic tire with the noise damper (T) according to claim 5 or 6, wherein in the application step, a distance between the nozzle (22) and the tread inner surface (2S) is in a range of from 1 to 30 cm.

8. The method for manufacturing the pneumatic tire with the noise damper (T) according to any one of claims 5 to 7, wherein the reaction mixture has a cream time of 10 seconds or less, a gel time in a range of from 20 to 60 seconds, and a rise time of 90 seconds or less.

9. The method for manufacturing the pneumatic tire with the noise damper (T) according to any one of claims 5 to 8, wherein in the application step, a rotational speed of the pneumatic tire (1) is in a range of from 10 to 60 rpm.

10. The method for manufacturing the pneumatic tire with the noise damper (T) according to any one of claims 4 to 9, wherein the polyol-containing component (Y) contains a polyol component (a) which is polyoxyalkylene polyol having an average number of functional groups in a range of from 2 to 3 and a hydroxyl number in a range of from 20 to 70 mgKOH/g, the polyoxyalkylene polyol being obtained by ring-opening addition polymerization of propylene oxide and ethylene oxide, and as a blowing agent, 3 to 10 parts by mass of water (d) with respect to 100 parts by mass of the polyol component (a).

**Patentansprüche**

1. Luftreifen mit einem Geräuschdämpfer (T), umfassend:

einen Luftreifen (1); und
einen Geräuschdämpfer (20), der aus porösem Harzschaum hergestellt und auf einer Laufflächeninnenfläche (2S) des Luftreifens (1) angeordnet ist;

wobei

der Geräuschdämpfer (20) durch einen einzelnen ringförmigen Körper (21) gebildet ist, der sich kontinuierlich in einer Reifenumfangsrichtung erstreckt, und
eine maximale Höhe (H) des Geräuschdämpfers (20) von der Laufflächeninnenfläche (2S) in einem Bereich von 12 bis 30 mm liegt,

wobei der Geräuschdämpfer (20) eine Kerndichte $\delta 1$ in einem Bereich von 35 bis 65 kg/m3 und eine Gesamtdichte $\delta 0$ in einem Bereich von 50 bis 105 kg/m3 aufweist, und wobei ein Verhältnis $\delta 1/\delta 0$ der Kerndichte $\delta 1$ und der Gesamtdichte $\delta 0$ in einem Bereich von 0,4 bis 0,8 liegt.

2. Luftreifen mit dem Geräuschdämpfer (T) nach Anspruch 1, wobei eine Querschnittsfläche des Geräuschdämpfers (20) in einem Bereich von 7,4 % bis 12,4 % einer Querschnittsfläche eines Reifeninnenhohlraums (TH) des Luftreifens (1) liegt.

3. Luftreifen mit dem Geräuschdämpfer (T) nach Anspruch 1 oder 2, wobei der Geräuschdämpfer (20) an der Laufflächeninnenfläche (2S) über eine Dichtmittelschicht (10) zum Verhindern eines Durchstoßens befestigt ist.

4. Verfahren zur Herstellung des Luftreifens mit dem Geräuschdämpfer (T) nach einem der Ansprüche 1 bis 3, wobei

    der poröse Harzschaum Polyurethanschaum ist, und
    der Geräuschdämpfer (20) in einem Aufbringungsschritt gebildet wird, in dem eine Reaktionsmischung aus einer Polyisocyanatkomponente (X) und einer polyolhaltigen Komponente (Y) auf die Laufflächeninnenfläche (2S) des Luftreifens (1) aufgebracht wird.

5. Verfahren zur Herstellung des Luftreifens mit dem Geräuschdämpfer (T) nach Anspruch 4, wobei in dem Aufbringungsschritt die Reaktionsmischung unter Verwendung einer Düse (22) auf die Laufflächeninnenfläche (2S) des Luftreifens (1), der sich in einer aufrechten Position dreht, aufgebracht wird.

6. Verfahren zur Herstellung des Luftreifens mit dem Geräuschdämpfer (T) nach Anspruch 5, wobei in dem Aufbringungsschritt in einem Unterhälftenabschnitt von einer Mitte des Luftreifens (1), der sich in der aufrechten Position dreht, die Reaktionsmischung unter Verwendung der Düse (22) aufgebracht wird, die unter einem Winkel θ in einem Bereich von 20 bis 70 Grad in einer Drehrichtung in Bezug auf die Laufflächeninnenfläche (2S) nach hinten geneigt ist.

7. Verfahren zur Herstellung des Luftreifens mit dem Geräuschdämpfer (T) nach Anspruch 5 oder 6, wobei in dem Aufbringungsschritt ein Abstand zwischen der Düse (22) und der Laufflächeninnenfläche (2S) in einem Bereich von 1 bis 30 cm liegt.

8. Verfahren zur Herstellung des Luftreifens mit dem Geräuschdämpfer (T) nach einem der Ansprüche 5 bis 7, wobei die Reaktionsmischung eine Cremezeit von 10 Sekunden oder weniger, eine Gelzeit in einem Bereich von 20 bis 60 Sekunden und eine Anstiegszeit von 90 Sekunden oder weniger aufweist.

9. Verfahren zur Herstellung des Luftreifens mit dem Geräuschdämpfer (T) nach einem der Ansprüche 5 bis 8, wobei in dem Aufbringungsschritt eine Drehzahl des Luftreifens (1) in einem Bereich von 10 bis 60 U/min liegt.

10. Verfahren zur Herstellung des Luftreifens mit dem Geräuschdämpfer (T) nach einem der Ansprüche 4 bis 9, wobei die polyolhaltige Komponente (Y) eine Polyolkomponente (a) enthält, die Polyoxyalkylenpolyol mit einer durchschnittlichen Anzahl von funktionellen Gruppen in einem Bereich von 2 bis 3 und einer Hydroxylzahl in einem Bereich von 20 bis 70 mg KOH/g ist, wobei das Polyoxyalkylenpolyol erhalten wird durch ringöffnende Additionspolymerisation von Propylenoxid und Ethylenoxid und als Treibmittel 3 bis 10 Massenteile Wasser (d) in Bezug auf 100 Massenteile der Polyolkomponente (a).

**Revendications**

1. Bandage pneumatique avec un amortisseur de bruit (T) comprenant :

    un bandage pneumatique (1) ; et
    un amortisseur de bruit (20) fait en mousse de résine poreuse et agencé sur une surface intérieure de bande de roulement (2S) du bandage pneumatique (1) ;
    dans lequel
    l'amortisseur de bruit (20) est formé par un corps annulaire unique (21) s'étendant en continu dans une direction circonférentielle du pneumatique, et
    une hauteur maximum (H) de l'amortisseur de bruit (20) depuis la surface intérieure de bande de roulement (2S) est dans une plage allant de 12 à 30 mm,
    dans lequel
    l'amortisseur de bruit (20) a une densité de noyau $\delta 1$ dans une plage allant de 35 à 65 kg/m$^3$ et une densité globale $\delta 0$ dans une plage allant de 50 à 105kg/m$^3$, et
    dans lequel
    un rapport $\delta 1/\delta 0$ de la densité de noyau $\delta 1$ et de la densité globale $\delta 0$ est dans une plage allant de 0,4 à 0,8.

2. Bandage pneumatique avec l'amortisseur de bruit (T) selon la revendication 1, dans lequel une aire de section transversale de l'amortisseur de bruit (20) est dans une plage allant de 7,4 % à 12,4 % d'une aire de section transversale d'une cavité intérieure de pneumatique (TH) du bandage pneumatique (1).

3. Bandage pneumatique avec l'amortisseur de bruit (T) selon la revendication 1 ou 2, dans lequel l'amortisseur de bruit (20) est fixé sur la surface intérieure de bande de roulement (2S) via une couche d'étanchéité (10) pour empêcher une crevaison.

4. Procédé de fabrication du bandage pneumatique avec l'amortisseur de bruit (T) selon l'une quelconque des revendications 1 à 3, dans lequel

la mousse de résine poreuse est une mousse polyuréthane, et
l'amortisseur de bruit (20) est formé dans une étape d'application dans laquelle un mélange réactionnel d'un composant polyisocyanate (X) et d'un composant contenant un polyol (Y) est appliqué sur la surface intérieure de bande de roulement (2S) du bandage pneumatique (1).

5. Procédé de fabrication du bandage pneumatique avec l'amortisseur de bruit (T) selon la revendication 4, dans lequel dans l'étape d'application, le mélange réactionnel est appliqué à l'aide d'une buse (22) sur la surface intérieure de bande de roulement (2S) du bandage pneumatique (1) en rotation dans une position verticale.

6. Procédé de fabrication du bandage pneumatique avec l'amortisseur de bruit (T) selon la revendication 5, dans lequel, dans l'étape d'application, dans une demi-portion inférieure depuis un centre du bandage pneumatique (1) en rotation dans la position verticale, le mélange réactionnel est appliqué à l'aide de la buse (22) inclinée sous un angle $\theta$ dans une plage allant de 20 à 70 degrés vers l'arrière dans une direction de rotation par rapport à la surface intérieure de bande de roulement (2S).

7. Procédé de fabrication du bandage pneumatique avec l'amortisseur de bruit (T) selon la revendication 5 ou 6, dans lequel, dans l'étape d'application, une distance entre la buse (22) et la surface intérieure de bande de roulement (2S) est dans une plage allant de 1 à 30 cm.

8. Procédé de fabrication du bandage pneumatique avec l'amortisseur de bruit (T) selon l'une quelconque des revendications 5 à 7, dans lequel le mélange réactionnel a un temps de crème de 10 secondes ou moins, un temps de gel dans une plage allant de 20 à 60 secondes, et un temps de levée de 90 secondes ou moins.

9. Procédé de fabrication du bandage pneumatique avec l'amortisseur de bruit (T) selon l'une quelconque des revendications 5 à 8, dans lequel, dans l'étape d'application, une vitesse de rotation du bandage pneumatique (1) est dans une plage allant de 10 à 60 tr/min.

10. Procédé de fabrication du bandage pneumatique avec l'amortisseur de bruit (T) selon l'une quelconque des revendications 4 à 9, dans lequel le composant contenant un polyol (Y) contient un composant polyol (a) qui est un polyol polyoxyalkylène ayant un nombre moyen de groupes fonctionnels dans une plage allant de 2 à 3 et un nombre d'hydroxyle dans une plage allant de 20 à 70 mgKOH/g, le polyol polyoxyalkylène étant obtenu par polymérisation par ouverture de cycle d'oxyde de propylène et d'oxyde d'éthylène, et comme agent gonflant, 3 à 10 parts en masse d'eau (d) par rapport à 100 parts en masse du composant polyol (a).

# FIG.1

EP 3 822 091 B1

**FIG.2**

# FIG.3A

# FIG.3B

# FIG.4

EP 3 822 091 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5658766 B
- JP 5860411 B
- JP 2006143020 A
- EP 1876038 A1
- EP 2093079 A1
- EP 3199382 A1